# EUROPEAN PATENT APPLICATION

(11) **EP 3 462 429 A1**
(43) Date of publication of application: **03.04.2019**
(21) Application number: 17194040.6
(22) Date of filing: 29.09.2017
(51) Int. Cl.: G08G 1/14, G06T 19/00

(54) **AUGMENTED REALITY PARKING SYSTEM AND METHOD THEREOF**

(71) Applicant: Deutsche Telekom AG, 53113 Bonn (DE)
(72) Inventor: LAWRENSON, Matthew John, 1030 Bussigny (CH); NOLAN, Julian Charles, 1009 Pully (CH); JAKUBEK, Sascha, 50858 Köln (DE)
(74) Representative: Vossius & Partner Patentanwälte Rechtsanwälte mbB

(57) **Abstract**

An augmented reality parking system to guide one or more vehicles to parking spaces in one or more parking locations, the system comprising: a parking location control unit to monitor the parking situation in the parking location; a parking control unit to provide a plurality of augmented reality, AR, objects and to provide interaction with a user; and a user control unit to track the vehicle.

## Description

The present invention relates to an augmented reality parking system to guide one or more vehicles to parking spaces in one or more parking locations and a method thereof.

Augmented Reality is a view whereby virtual objects are overlaid on a user's sight of real objects. The virtual objects are rendered using a computer and are viewed by the user using AR displays, which may be an augmented reality headset, such as Microsoft's HoloLens, a 'heads up display' on a vehicle windscreen, or may be a standard screen such as those used on smartphones.

In general, parking affects both the users of vehicles and the general population.

When planning a journey, the location of a car park and time to park a vehicle can be important considerations. This is especially the case in populated areas where parking occupancy tends to be high.

Furthermore, parking of a vehicle is often chargeable, either by the owner of a parking location or by a government body; therefore the cost of parking may also be an important consideration for the vehicle's owner or user.

Additionally, the user may wish to combine their vehicle journey with the use of public transport, so again the location of parking and time to park may well be important considerations.

A final consideration is that parking can be frustrating to the user, with most drivers agreeing that it is one of the least pleasurable parts of a journey.

Furthermore, since all vehicles cause pollution at some level, hence increased vehicle use whilst finding parking potentially contributes to the degradation of the environment. By having a clearer view of the parking situation at their destination, a vehicle driver can make choices that reduce the environmental impact of their journey.

Moreover, as with the previous example, if the user is able to conveniently combine a vehicle journey with the use of public transport then they have additional options to reduce their environmental impact.

Thus, there is a need (i) to encourage users to take actions that will lead to a more efficient management of a parking location and/or (ii) to communicate desired actions to users of a parking location in a way that makes them more likely to respond.

Hence, the purpose of the invention is a parking location management system that is able to optimize utilization, efficiency, environment (e.g. air pollution) and encourage behavior that promotes safety amongst users.

Accordingly, the present invention is directed to an augmented reality parking system to guide one or more vehicles to parking spaces in one or more parking locations and a method thereof that substantially obviates one or more of the above problems.

To achieve the above objects and according to an aspect of the present invention, there is provided an augmented reality parking system to guide one or more vehicles to parking spaces in one or more parking locations, the system comprising: a parking location control unit to monitor the parking situation in the parking location; a parking control unit to provide a plurality of augmented reality, AR, objects and to provide interaction with a user; and a user control unit to track the vehicle.

The parking location control unit may comprise a parking location capabilities lookup table, LUT; a parking area monitor unit including one or more sensors; an issue database for storing a plurality of rules that determine if an issue occur, wherein the issue includes occupancy in the parking location; a solution database for storing solutions to mitigate the issues in the issue database; and a parking organization algorithm for taking data from the parking area monitor unit and comparing it with data from the issue database.

The parking location control unit may further comprise: a vehicle prediction unit to calculate a probability of a potential vehicle entering the parking location.

The parking control unit may comprise: a parking scenario creation algorithm to create an AR scenario; an AR object creation unit to create the AR objects; a reward unit to compute a score and allocate one or more rewards and/or one or more penalties to the user; and a parking assessment unit to assess an interaction between the user and the AR objects.

The user control unit may comprise: a vehicle specification LUT for storing data on the dimensions of the vehicle; and a vehicle location unit for tracking the location of the vehicle and for monitoring the vehicle.

According to another aspect of the present invention, there is provided a vehicle for use with the system described above, the vehicle comprising: an augmented reality, AR, display to display a plurality of AR objects to the user in order to guide the vehicle to the parking space.

According to a further aspect of the present invention, there is provided a method for implementation of an augmented reality, AR, scenario that guides one or more vehicles to packing spaces in one or more parking locations, the method comprising: establishing an issue database and a solution database; monitoring the parking locations via a parking area monitor, and creating parking area data; comparing the parking area data with data from the issue database, wherein when a match of an issue is found, retrieving a solution from the solution database; detecting if a vehicle is suitable to be parked in the parking location, wherein when a vehicle according to claim 6 is found and the vehicle matches a requirement of the solution, creating an AR scenario based on the solution using a parking scenario creation algorithm.

The creation of the AR scenario may comprise: tracking the vehicle via a vehicle location unit; mapping out navigation path to a target destination based on the solution from the solution database; and displaying a plurality of AR objects to guide the vehicle to the target destination.

The method may further comprise assessing the AR scenario via a parking assessment unit, such that an interaction between the user and the AR object occurs when the location of the vehicle coincides with a location of the AR object.

When the interaction between the user and the AR object is deemed successful, allocating a score and/or a reward to the user; or deducting a score and allocating a penalty to the user according to the solution.

When the interaction between the user and the AR object is not deemed successful, allocating a score and/or a reward to the user; or deducting a score and allocating a penalty to the user according to the solution.

In addition, issues that may occur in a parking location are determined, and potential solutions are also ascertained.

The solutions may be mapped to actions that users of the parking location should take.

A 'scenario' or AR Scenario is devised using augmented reality objects that are displayed to the user in order to make the user more likely to undertake an action.

The user interacts with the AR scenario and is rewarded for taking the desired actions.

According to the above-described system, vehicle and/or method, the present invention has the advantageous effect of allowing the management of parking Locations to be carried out in a way that encourages users to participate in actions that solve issues. This in turn leads to more efficient parking locations, potentially with higher utilization and lower pollution etc.

### BRIEF DESCRIPTION OF THE DRAWINGS

The accompanying drawings, which are included to provide a further understanding of the invention and are incorporated in and constitute a part of this application, illustrate embodiment(s) of the invention and together with the description serve to explain the principle of the invention. In the drawings:
FIG. 1 is a schematic of an augmented reality parking system according to an embodiment of the present invention; and
FIG. 2 is a schematic of the method process according to an embodiment of the present invention.

### DETAILED DESCRIPTION OF THE INVENTION

In the following description, the terminologies described below are defined in consideration of functions in the present invention. However, the elements of the present invention should not be limited by the terminologies used in the specification of the present invention. That is, such terminologies will be used only to differentiate one element from other elements of the present invention.

Thus, in the present invention, Vehicle Driver is also described as the 'User'.

The term "parking location" refers to a geographical zone containing parking spaces. Examples of Parking Locations include streets that contain areas where drivers can legally park, a car park or an area of ground where parking takes place. A Parking Location typically contains a plurality of Parking Spaces.

The term "a Parking Space" refers to the individual spaces within a Parking Location where a vehicle can be parked. Where the location of an individual Parking Space needs to be identified, existing localization methods, such as those based on satellites like Global Positioning System (GPS), or based on the mobile network triangulation may be used by the smart phone and/or car system in combination with much more precise triangulation of the planed narrow band internet of things (NBIoT). If NBIoT is used, then since NBIoT will use existing Universal Mobile Telecommunications System (UMTS) devices, a Communication Unit can be used that also contains this functionality i.e. that is able to use new capabilities of the network (800MHz Band 20 and 900MHz Band 8) as outlined by the 3rd Generation Partnership Project (3GPP) standardization body.

The term "an issue" refers to a set of measurements that describe a circumstance that is unwanted by the Parking Location's management.

The term "a solution" is defined as a process that includes the motion of a vehicle that leads to a circumstance that alleviates an Issue. Solutions have "Solution Parameters", which further describe a Solution and include items such as:
a. Routing, being the route or trajectory the Vehicle takes when moving within the Parking Location
b. Final Location: The final location the Vehicle stops. Note this means the exact location of the Vehicle, for example where within a Parking Space the Vehicle stops.
c. Speed: The speed of the Vehicle as it moves along the Route to the Final Location.
d. AR Objects: An AR Object is the augmented reality rendering displayed to the user. Examples of AR Objects include figures (e.g. cartoon figures, for example human caricatures or animals), objects (e.g. images of food, jewels etc.). AR Objects may be subdivided into classes, for example:
   i. Good AR Objects may be used to encourage the user to perform a certain action, and a reward may be offered if the user interacts with a Good AR Object.
   ii. Bad AR Objects may be used to discourage the user to perform a certain action and a penalty may be used if the user interacts with a Bad AR Object.

Thus, examples of Solutions include:
a. Routing polluting Vehicles to have a Final Location near an air vent.
b. Setting a Final Location such that it 'corrects' previous bad parking where a driver has parked close to or overlapping parking demarcation lines.

The term "AR Scenario" refers to the 'construct' in which the user interacts with the AR Objects. It may include a points scoring system, the collection of 'sets' of AR Objects, and may also include competition with other users.

Hereinafter, an augmented reality parking system to guide one or more vehicles to parking spaces in one or more parking locations according to exemplary embodiments of the present invention will be described in detail with reference to the accompanying drawings.

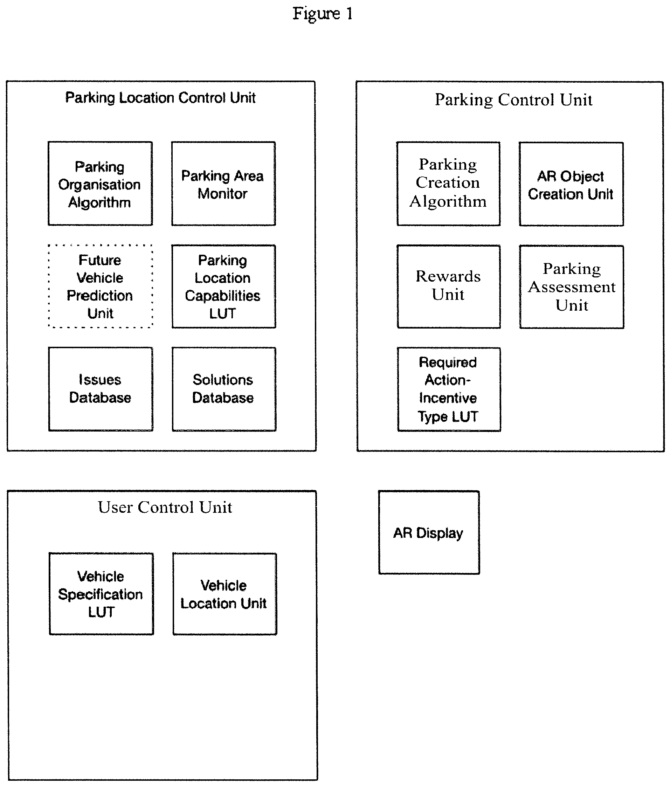

FIG. 1 is a schematic illustrating an augmented reality parking system according to an embodiment of the present invention.

Referring to FIG. 1, the system, according to the embodiment of the present invention will include:
1. A unit (the "Parking Location Control Unit"), which may further comprise:
   a. A lookup table (the "Parking Location Capabilities LUT") that contains a list of capabilities associated with the Parking Location. Examples of capabilities may include:
      i. The number of Parking Spaces in a certain section or zone of the Parking Location.
      ii. The location and potential performance of plant within the parking Location, such as air extraction units.
      iii. The location of various items within the Parking Location, such as Parking Spaces, exit doors etc.
   b. A unit (the "Parking Area Monitor"), including at least one sensor (the Parking Area Sensor"), examples of sensors being:
      i. Cameras.
      ii. Proximity sensors.
      iii. Air quality monitors.
      iv. Etc.
   c. A database (the "Issues Database"), being a database that stores a set of rules that can be used to determine if an issue (hereafter defined as an "Issue") has occurred. Examples of Issues are:
      i. Relative occupancy of a certain location within the parking area is above or below a desired level.
      ii. The requirement of vehicles to be parked between demarcation lines has not been met.
      iii. The arrangement of vehicles within a parking location is poorly matched to their propensity to produce pollution (e.g. larger diesel vehicles should be parked in a region that has higher levels of dispersion capability (e.g. extraction fans) whilst electric vehicles can park in locations that have lower pollution dispersion capabilities).
   d. A database (the "Solutions Database"), storing desired actions that can mitigate an Issue (defined as "Solutions"). Solutions are associated with Issues, hence by knowing an Issue, one or a set of Solutions can be determined.
   e. An algorithm (the "Parking Organization Algorithm") that takes data gathered by the Parking Area Monitor and compares it to the Issue Database in order to identify any Issues that are occurring.
   f. Optionally, a unit (the "Future Vehicle Prediction Unit") that predicts the likelihood that a future vehicle (for example, the next vehicle to enter the Parking Location will be of a certain type (e.g. electric/diesel, large/small etc.). In order to make this prediction, the Future Vehicle Prediction Unit will have access to statistical data outlining the relative proportion of different types of vehicles within the general vehicle population of the area in question.
2. A unit (the "Parking Control Unit") which may include:
   a. An algorithm (the "Parking Creation Algorithm") able to create the AR Scenario.
   b. A unit (the AR Object Creation Unit") able to create the AR Objects used within the AR Scenario. This might be a database of pre-defined AR Objects that can then be selected.
   c. A unit (the "Reward Unit"), being a unit that maintains a 'score' and manages the giving out and reduction of rewards.
   d. A unit (the "Parking Assessment Unit"), that assesses the interaction between the user (and in particular the user's vehicle) and the AR Objects.
3. A unit (the "User Control Unit")
   a. A lookup table (the "Vehicle Specification LUT") containing data regarding common vehicles, such as their width, length, height etc.
   b. A unit (the "Vehicle Location Unit") able to track the location of the Vehicle. The Vehicle Location Unit may use a camera to monitor the vehicles externally, or may contain a location device such as a beacon or GPS. Where a single point is being measured the Vehicle Location Unit also needs to be able to measure where that single point is with respect to the Vehicle's form. For example, if the location is that of a smartphone within the Vehicle, the smartphone's exact location within the vehicle must also be ascertained. This may be achieved through triangulation of the smartphone's signals using aerials within the vehicle or external to it, or by use of a camera, or by having a set location where the location unit must be placed.
4. A method of displaying the AR Object to the user (the "AR Display")

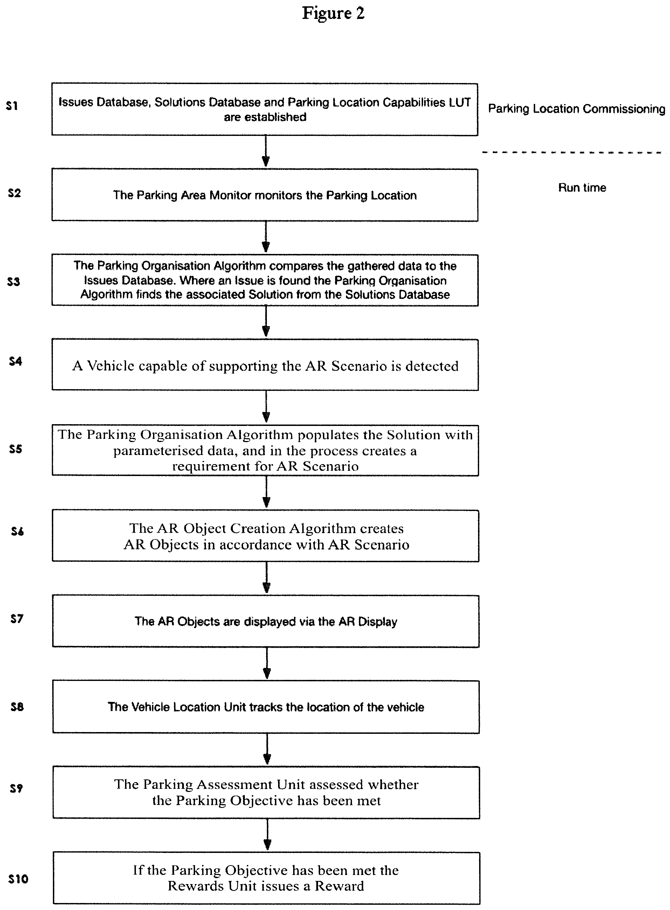

   FIG. 2 is a schematic illustrating the method process according to an embodiment of the present invention.

Referring to FIG. 2, during commissioning of the parking area:
In Step S1, the Issues Database and Solutions Database are established. This may be manually achieved during the commissioning of the Parking Location. The Parking Location Capabilities are also determined and compiled into the Parking Location Capabilities LUT.

At run time, in Step S2, the Parking Area Monitor monitors the Parking Location, this may be achieved using, for example:
a. Pollution sensors monitoring the levels of pollution at various points within the parking area.
b. A video camera monitoring the positioning of parked vehicles with respect to demarcation lines.
c. Etc.

In Step S3, the Parking Organization Algorithm takes the data from the Parking Area Monitor and compares it to issues stated in the Issues Database. Examples of discovered Issues may be:
a. Pollution within a stated zone of the Parking Location may be above of prescribed level.
b. A vehicle in a certain Parking Space may have parked such that the vehicle goes beyond the demarcation lines.

Additionally, in Step S3, where the data gathered by the Parking Area Monitor matches that of a stated Issue then the algorithm:
c. Finds the corresponding Solution from the Solutions Database. Where more than one Solution is available then they may be ranked based on, for example, the ability of the next Vehicle or User to carry out the required actions, and the most appropriate Solution chosen. The Solution may be applicable to any vehicle, or may be parameterized by vehicle type, i.e. (taking as an example a Parking Location with multiple defined zones):
   i. The Solution may be to decrease parking in Zone A and increase in Zone B - in this case the Solution could be applied to any Vehicle.
   ii. The Solution may be to park a small vehicle next to a vehicle that has parked over demarcation lines - in this case the Solution can only be applied to a Vehicle under a certain size.
   iii. The Solution may be to park vehicles with carbon fuel combustion engines in Zone A and electric vehicles in Zone B, hence the Solution relies on specific Vehicle types.

In Step S4, once a Solution has been selected the Parking Location Monitor determines when a suitable vehicle is due to be parked, where a suitable Vehicle:
a. Matches any parameters stipulated by the Solution.
b. Where the Vehicle's driver is interacting with the User Control Unit.
c. Where the Vehicle's driver has access to the AR Display.

In Step S5, when a suitable vehicle is available then the Parking Creation Algorithm creates the AR Scenario. This may involve:
a. Determining the location of AR Objects that can be used to encourage the vehicle driver to perform the actions stated in the Solution. For example:
   i. For Routing - AR Objects can be placed either in a continuous line that can be followed by the vehicle driver, or can be placed at key decision points (junctions) to encourage the driver to turn a certain way.
   ii. For Final Location - the AR objects can be placed such that the vehicle driver needs to position their vehicle in a very specific location in order to make the required interaction with the AR Object.
   iii. For Speed - the temporal nature in which the AR Object will be displayed to the driver can be devised such that the driver maintains a certain speed, or the class of AR Object can be changed in order to encourage a certain type of behavior (i.e. the driver may speed up to interact with 'good' AR Objects and slow down to ensure they don't interact with 'bad' AR Objects).

In Step S6, once the suitable vehicle/User is determined, and the location, type and temporal requirements for the AR Objects have been set, the AR Object Creation Unit creates the AR Objects to be used in the AR Scenario. The AR Objects are displayed via the AR Display (Step S7) These AR Objects may be personal to the user, i.e. perhaps the user is collecting a set of AR Objects, or the AR Objects may be personalized to a User's AR Scenario history in some way, or the AR Objects may be tailored to the location of their use, for example long thin AR Objects (resembling guidance lines) may be used to help guide the driver whilst parking, or 'swamp monster' type AR Objects may be used to deter the driver from parking on swamp like ground.

Once the Solution has been devised and the required AR Object(s) have been created, the Vehicle is tracked using the Vehicle Location Unit (Step S8) and when it is in certain locations the required AR Objects are displayed to the user. The location the AR Objects are placed is passed to the Parking Assessment Unit.

The Vehicle's location is then further tracked and passed to the Parking Assessment Unit, and where it coincides with the location of the AR Object then the Vehicle's Driver is considered to have successfully interacted with the AR Object (Step S9):
a. The tolerance of the distance between the Vehicle and AR Object may changed depending on the AR Object's purpose in the AR Scenario, for example if it is to encourage the driver to turn left or right then the tolerance can be larger, if it is to encourage the driver to park in a very specific place then the tolerance can be smaller.
b. In some circumstances the driver may have to interact with two AR Objects in order for the interaction to be successful, for example if the driver needs to park at a certain angle then there may be an AR Object at the front and back of the vehicle.
c. The location overlap between the vehicle and AR Object may require a certain part of the vehicle to be in a certain location - for example if the driver needs to park in a very specific location it may be that the center of the Vehicle's bonnet needs to be in the same location as the AR Object.

In Step S10, if a successful interaction has been deemed to take place, i.e. the AR scenario objective has been met, then the Rewards Unit grants a reward to the Vehicle Driver. Examples of rewards may be:
a. Points granted to the user.
b. The user 'collects' the AR Object that took place in the interaction.

To facilitate a better understanding of the present invention, three working scenarios are provided herewith.

### First example of a working scenario - optimization of parking garage utilization:

A parking garage wishes to encourage drivers to park on its 3rd floor (for example this may be to achieve an environmental goal as overall fume extraction is more efficient if driver do this) - whereas if left to their own devices drivers would park on the 1st floor. A scenario is devised where people earn points by collecting 'happy parking emojis' with a parking emoji being a virtual cartoon character. The happy parking emojis are displayed on the vehicle's head's up display, AR windscreen or via 'AR glasses' type device. The driver collects them by driving into them. Happy parking emojis are lines up along the route to the 3rd floor - thus encouraging the driver to continue driving, as that way they will collect more than if the stopped at the 1sr floor. The same parking garage does not wish drivers of large diesel vehicles to park on the 7th floor, as this has a ventilation method that is not efficient for diesel fumes, and the spaces are small there. Hence when such as vehicle is identified a 'scary parking emoji', which would cause the driver to lose points in the scenario, is displayed - hence the driver is deterred from entering that floor. The drivers collect (or lose) points, and when 100 points is achieved they earn one hour's free parking.

### Second example of a working scenario - correction of poor parking:

A vehicle is parked in a parking space that is the 2nd in a line of 10 adjacent spaces. Its wheels overlap into the third space, hence it is 'poorly parked'. Another driver arrives later and have a choice of spaces to park - the 3rd space is the most convenient for the exit door, so without the system it is more likely that the new driver will park in the third space, but due to the poor parking of the first driver the second driver parks with their wheels in the fourth space - and so on leading to a series of poorly parked spaces. After a while one of the spaces becomes impossible to use, as the space that is left is not wide enough for a typical vehicle. With the system however, a scary parking emoji (which would lose the driver points) is placed in the third space if the new driver has a large vehicle, or a happy parking emoji is placed in the third space if the new driver has a small vehicle, or it is identified that their vehicle has self-parking capability. An optimal addition is that happy parking emojis are placed in other spaces for large vehicles.

It will be apparent to those skilled in the art that various modifications and variations can be made in the present invention without departing from the scope of the inventions. Thus, it is intended that the present invention covers the modifications and variations of this invention provided they come within the scope of the appended claims and their equivalents.

## Claims

1. An augmented reality parking system to guide one or more vehicles to parking spaces in one or more parking locations, the system comprising:
a parking location control unit to monitor the parking situation in the parking location;
a parking control unit to provide a plurality of augmented reality, AR, objects and to provide interaction with a user; and
a user control unit to track the vehicle.

2. The system according to claim 1, wherein the parking location control unit comprises:
a parking location capabilities lookup table, LUT;
a parking area monitor unit including one or more sensors;
an issue database for storing a plurality of rules that determine if an issue occur, wherein the issue includes occupancy in the parking location;
a solution database for storing solutions to mitigate the issues in the issue database; and
a parking organization algorithm for taking data from the parking area monitor unit and comparing it with data from the issue database.

3. The system according to claim 1 or 2, wherein the parking location control unit further comprises:
a vehicle prediction unit to calculate a probability of a potential vehicle entering the parking location.

4. The system according to claim 1 or 2, wherein the parking control unit comprises:
a parking scenario creation algorithm to create an AR scenario;
an AR object creation unit to create the AR objects;
a reward unit to compute a score and allocate one or more rewards and/or one or more penalties to the user; and
a parking assessment unit to assess an interaction between the user and the AR objects.

5. The system according to claim 1 or 2, wherein the user control unit comprises:
a vehicle specification LUT for storing data on the dimensions of the vehicle; and
a vehicle location unit for tracking the location of the vehicle and for monitoring the vehicle.

6. A vehicle for use with a system according to any one of claims 1 to 5, the vehicle comprising:
an augmented reality, AR, display to display a plurality of AR objects to the user in order to guide the vehicle to the parking space.

7. A method for implementation of an augmented reality, AR, scenario that guides one or more vehicles to packing spaces in one or more parking locations, the method comprising:
establishing (S1) an issue database and a solution database;
monitoring (S2) the parking locations via a parking area monitor, and creating parking area data;
comparing (S3) the parking area data with data from the issue database, wherein when a match of an issue is found, retrieving a solution from the solution database;
detecting (S4) if a vehicle is suitable to be parked in the parking location, wherein when a vehicle according to claim 6 is found and the vehicle matches a requirement of the solution, creating (S6) an AR scenario based on the solution using a parking scenario creation algorithm.

8. The method according to claim 7, wherein creating the AR scenario comprises
tracking (S8) the vehicle via a vehicle location unit;
mapping out navigation path to a target destination based on the solution from the solution database; and
displaying a plurality of AR objects to guide the vehicle to the target destination.

9. The method according to claim 7 or 8, further comprising
assessing (S9) the AR scenario via a parking assessment unit, such that an interaction between the user and the AR object occurs when the location of the vehicle coincides with a location of the AR object.

10. The method according to any one of claims 7 to 9,
wherein, when the interaction between the user and the AR object is deemed
successful (S10), allocating a score and/or a reward to the user; or
deducting a score and allocating a penalty to the user according to the solution.

11. The method according to any one of claims 7 to 10,
wherein when the interaction between the user and the AR object is not deemed successful,
allocating a score and/or a reward to the user; or
deducting a score and allocating a penalty to the user according to the solution.
